# NOUVEAU FASCICULE DE BREVET EUROPEEN

(11) **EP 1 794 383 B2**
(45) Date de publication et mention de la décision concernant l'opposition: **05.04.2017**
(45) Mention de la délivrance du brevet: 31.03.2010
(21) Numéro de dépôt: 05798964.2
(22) Date de dépôt: 09.09.2005
(51) Int. Cl.: E04B 1/74

(54) **PROCEDE DE DURCISSEMENT D'UN LIANT SUR DES FIBRES ISOLANTES**
VERFAHREN ZUR HÄRTUNG EINES BINDEMITTELS AUF ISOLIERFASERN
METHOD FOR CURING A BINDER ON INSULATING FIBRES

(30) Priorité: 10.09.2004 US 939277
(43) Date de publication de la demande: 13.06.2007
(73) Titulaire: SAINT-GOBAIN ISOVER, 92400 Courbevoie (FR)
(72) Inventeur: YANG, Alain, PA 19085 Villanova (US); TRABBOLD, Mark, Harleysville, Pennsylvania 19438 (US); BOUQUET, François, Blue Bell, Pennsylvania 19422 (US)
(74) Mandataire: Saint-Gobain Recherche
(86) Numéro de dépôt international: PCT/FR2005/050725
(87) Numéro de publication internationale: WO 2006/030151

(56) Documents cités:
- WO-A1-93/23599
- DE-C- 970 778
- DK-A- 611 188
- GB-A- 802 158
- US-A1- 2004 118 506
- US-A1- 2005 025 952
- US-A1- 2005 153 612

## Description

L'invention concerne de manière générale le domaine du durcissement d'un liant sur un isolant fibreux.
De nombreuses fibres isolantes qui forment une masse sont liées les unes aux autres à l'aide d'un liant thermodurcissable pour former un isolant fibreux lâche qui présente les valeurs souhaitées de densité ainsi qu'une épaisseur normalisée à une valeur de R. Un type d'isolant fibreux est adapté pour remplir des cavités de parois et de plafonds d'un bâtiment pour ainsi diminuer le taux de transfert thermique à travers l'isolant. Un autre type d'isolant fibreux est une chemise de conduit (« duct liner ») destinée à entourer un conduit d'air de ventilation. La chemise de conduit abaisse le taux de transfert de chaleur à travers l'isolant et en outre réduit le bruit associé à l'écoulement d'air dans le conduit d'air. L'isolant fibreux peut être recouvert d'une couche de surface qui peut par exemple présenter la forme d'une feuille ou d'une nappe flexible qui constitue une surface d'écoulement d'air et/ou qui contrôle la transmission de vapeur à travers l'isolant.

Pendant la fabrication d'un isolant fibreux, on disperse un liant parmi les nombreuses fibres isolantes et on assemble un ensemble de fibres isolantes sur un transporteur pour former un isolant fibreux lâche. L'isolant fibreux est transporté par le transporteur à travers un four aussi appelé étuve de durcissement ou de réticulation qui sert à durcir le liant. Le liant est soit un liant à base liquide, habituellement en solution ou en émulsion, ou un liant sec, habituellement sous forme de poudre. En variante, le liant sec sera un polymère thermodurcissable sous forme fibreuse dispersé parmi les fibres isolantes. Le liant est durci en chauffant le liant jusqu'à sa température de durcissement. Le liant subit une transformation de phase pour atteindre un état thermodurci. En outre, le liant lie les fibres isolantes les unes aux autres dans l'isolant fibreux lâche.

Pour durcir le liant, on amène un gaz chaud à s'écouler dans l'isolant fibreux. La température du gaz chaud correspond à la température de durcissement du liant. Cependant, l'écoulement libre du gaz chaud vers l'intérieur de l'isolant fibreux est freiné par l'épaisseur de l'isolant fibreux et par la densité de l'isolant fibreux. Par conséquent, le liant présent sur les fibres isolantes situées dans la partie la plus interne d'un isolant fibreux épais durcira à une vitesse de durcissement plus faible que le liant présent sur les fibres isolantes situées dans la partie externe ou près de l'extérieur de l'isolant fibreux. Un isolant fibreux formé par un procédé connu de pose à l'air aura une densité uniforme de fibres isolantes dans toute la masse. Cependant, un procédé d'accumulation connu en fabrication d'un isolant fibreux assemble les fibres isolantes selon une distribution irrégulière, en créant des parcours de court-circuit d'écoulement d'air entre les fibres isolantes de l'isolant fibreux. Lorsqu'un gaz chaud est envoyé dans l'isolant fibreux pour durcir le liant, les parcours de court-circuit d'écoulement d'air deviennent des points chauds. Le liant présent sur les fibres isolantes en ces endroits durcit à une vitesse de durcissement élevée à cause des points chauds, tandis que le liant présent sur d'autres fibres isolantes durcit à une vitesse de durcissement plus lente.

Il existe actuellement un besoin pour un procédé de durcissement d'un liant présent sur des fibres isolantes d'un isolant fibreux, lequel procédé compense la petite vitesse de durcissement du liant présent sur les fibres isolantes situées dans la partie interne de l'isolant fibreux. En outre, il existe actuellement un besoin pour un procédé de durcissement d'un liant présent sur des fibres isolantes qui compense la haute vitesse de durcissement du liant sur les fibres isolantes qui correspondent aux endroits auxquels il existe des parcours de court-circuit d'écoulement d'air.

L'invention concerne un procédé de durcissement ou de réticulation d'un liant présent sur des fibres isolantes d'un isolant fibreux selon la revendication 1, dans lequel la température du gaz chaud est ajustée à la température de durcissement du liant et dans lequel le gaz chaud est amené à s'écouler à une vitesse ajustée vers le bas dans l'isolant fibreux et vers le haut dans l'isolant fibreux pour durcir le liant et compenser la faible vitesse de durcissement du liant sur les fibres isolantes présentes dans la partie interne de l'isolant fibreux.

Dans un mode de réalisation de la présente invention, un procédé de durcissement d'un liant présent sur des fibres isolantes d'un isolant fibreux comprend les étapes qui consistent à envoyer un écoulement de gaz chaud dans une combinaison d'un écoulement vers le haut et d'un écoulement vers le bas dans l'isolant fibreux et à laisser s'échapper le gaz chaud pour refroidir le liant.

Dans un autre mode de réalisation de la présente invention, un procédé de durcissement d'un liant présent sur les fibres isolantes d'un isolant fibreux comprend les étapes qui consistent à faire recirculer au moins une partie de l'écoulement de gaz chaud pour former un écoulement de gaz de recirculation et à combiner l'air ambiant chauffé à la flamme avec l'écoulement de gaz de recirculation de manière à former l'écoulement de gaz chaud qui est envoyé sur les fibres isolantes.

Dans un autre mode de réalisation de la présente invention, un procédé de durcissement d'un liant sur les fibres isolantes d'un isolant fibreux comprend l'étape qui consiste à envoyer un écoulement de gaz chaud dans une combinaison d'un écoulement vers le haut et d'un écoulement vers le bas dans l'isolant fibreux, à durcir le liant et à compenser la faible vitesse de durcissement du liant sur les fibres isolantes situées dans la partie interne de l'isolant fibreux, et ensuite à laisser s'échapper le gaz chaud et à envoyer de l'air de refroidissement sur l'isolant fibreux pour refroidir le liant situé sur les fibres isolantes sur lesquelles il existe des parcours de court-circuit d'écoulement d'air.

Des modes de réalisation vont maintenant être décrits à titre d'exemple en référence à la description détaillée qui suit et aux dessins annexés.
La figure 1 est une vue schématique d'un appareil de durcissement d'un liant présent sur les fibres isolantes placé sur un transporteur qui se déplace dans l'appareil,
la figure 2 est une vue schématique d'un appareil de formation d'un écoulement de gaz chaud envoyé sur les fibres isolantes et
la figure 3 est une vue schématique de l'appareil utilisé pour appliquer une couche de surface sur un isolant fibreux.

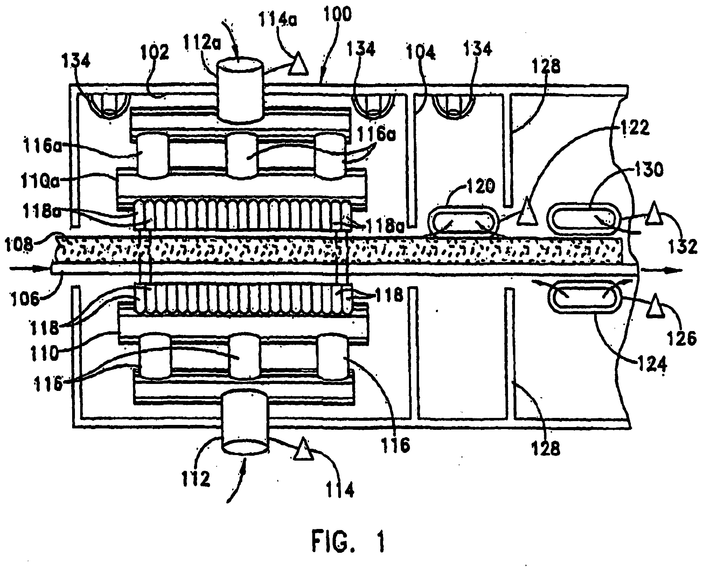

La figure 1 divulgue un four de durcissement (100) qui présente une chambre (102) de la zone de chauffage fortement isolée et une chambre (104) de la zone de refroidissement adjacente. Une combinaison de la chambre (102) de la zone de chauffage et de la chambre (104) de la zone de refroidissement forme un étage du four de durcissement (100). Un transporteur (106) qui se déplace en continu porte un isolant fibreux (108) formé d'une masse de nombreuses fibres isolantes qui sont assemblées sur le transporteur (106). Un liant est dispersé parmi les fibres isolantes et les fibres isolantes sont assemblées sur le transporteur (106) pour former un isolant fibreux (108) lâche.

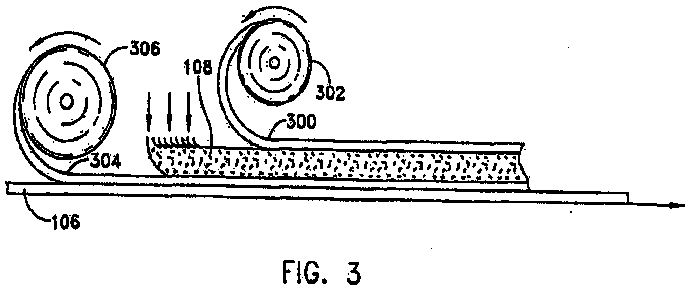

La figure 3 divulgue un autre mode de réalisation de l'isolant fibreux (108). Une nappe continue d'une couche de surface (300) en fibres de verre non tissé peut être délivrée par un rouleau (302) et est appliquée sur au moins l'un des deux côtés principaux de l'isolant fibreux (108) avant que l'isolant fibreux (108) pénètre dans le four de durcissement (100). La couche de surface (300) est une couche ou un film flexible qui est reliée à au moins une surface principale de l'isolant fibreux (108) de fibres isolantes et la recouvre. La couche de surface (302) comprend un film d'absorption du son et/ou une barrière de vapeur qui repousse ou régule d'une autre manière le niveau d'absorption de vapeur d'eau atmosphérique dans l'isolant.

Dans l'exemple de procédé représenté dans la figure 3, la couche (300) de surface en non-tissé est appliquée sur le côté principal qui constitue le côté supérieur de l'isolant fibreux (108) lorsqu'elle pénètre dans le four de durcissement (100), mais selon les besoins et les préférences de chaque cas particulier de conception du procédé de fabrication, la couche de surface (300) en non-tissé peut être appliquée sur le côté inférieur de l'isolant fibreux (108). Dans un autre mode de réalisation de la présente invention, on peut appliquer une couche de surface (300) en non-tissé sur les deux côtés de l'isolant fibreux (108). Dans un autre mode de réalisation de la présente invention, on peut utiliser une couche de renfort (304) constituée d'une feuille de verre non-tissé délivrée par un rouleau (306) comme couche de base pour la garniture de conduit selon la présente invention, pour lui conférer un soutien mécanique supplémentaire. La feuille non-tissée peut être appliquée sur l'isolant fibreux (108) à la base de l'isolant fibreux (108) et elle peut être chauffée et durcie en même temps que l'isolant fibreux.

La figure 1 montre que l'isolant fibreux (108) est transporté par le transporteur dans le four de durcissement (100) pur faire durcir le liant. Un collecteur inférieur (110) présente un conduit inférieur d'entrée (112) pour apporter le gaz chaud, typiquement de l'air chaud. Une commande ajustable (114) ajuste le débit de gaz chaud dans le conduit inférieur d'entrée (112). Le conduit inférieur d'entrée (112) alimente plusieurs conduits de répartition (116) qui alimentent le collecteur inférieur (110). Le collecteur (110) répartit le gaz chaud parmi de nombreux conduits de sortie (118) dirigés vers le haut qui sont espacés étroitement les uns des autres, de manière à créer une répartition régulière du gaz chaud envoyé vers le haut à travers le transporteur (106) en déplacement et par le bas dans l'isolant fibreux (108) transporté par le transporteur (106). Le gaz chaud est envoyé dans l'isolant fibreux (108) pour durcir le liant. Le transporteur (106) est avantageusement poreux et/ou perméable vis-à-vis de l'écoulement de gaz chaud. En outre, le transporteur (106) aura une masse aussi petite que possible pour garantir qu'il soit chauffé rapidement jusqu'à la température du gaz chaud. En outre, le transporteur (106) est refroidi rapidement lorsque l'isolant fibreux (108) est refroidi. De plus, le transporteur (106) peut avoir des propriétés magnétiques qui le retiennent sur un mécanisme d'entraînement, ce qui limite la plage supérieure des températures de chauffage du four (100).

La figure 1 divulgue qu'un collecteur supérieur (110a) présente un conduit supérieur d'entrée (112a) qui transporte du gaz chaud, typiquement de l'air chaud. Une commande ajustable (114a) ajuste le débit de gaz chaud dans le conduit supérieur d'entrée (112a). Le conduit supérieur d'entrée (112a) alimente plusieurs conduits de répartition (116a) qui alimentent le collecteur supérieur (110a). Le collecteur supérieur (110a) répartit le gaz chaud entre plusieurs conduits de sortie (118a) dirigés vers le bas qui sont étroitement espacés les uns des autres de manière à créer une répartition régulière de gaz chaud envoyé vers le bas sur le sommet de l'isolant fibreux (108) transportée par le transporteur (106). Le gaz chaud est envoyé dans l'isolant fibreux (108) pour durcir le liant.

En outre, la figure 1 divulgue un exemple de conduit d'échappement (120) situé en aval de la chambre (102) de la zone de chauffage. Un ou plusieurs conduits d'échappement (120) recouverts d'un isolant sont prévus dans la chambre (104) de la zone de refroidissement située immédiatement en aval de la chambre (102) de la zone de chauffage. Chaque conduit d'échappement (120) laisse s'échapper l'écoulement de gaz latéralement par rapport à l'écoulement vers le haut et à l'écoulement vers le bas du gaz chaud. Chaque conduit d'échappement (120) est doté d'une commande ajustable (122), par exemple un obturateur ajustable commandé par moteur qui régule le débit de gaz de recirculation qui s'échappe de la chambre (104) de la zone de refroidissement. Au moins une partie de l'écoulement de gaz chaud qui a été envoyée dans l'isolant fibreux (108) pour chauffer et durcir le liant s'échappe par le ou les conduits d'échappement (120) pour devenir un écoulement de gaz de recirculation.

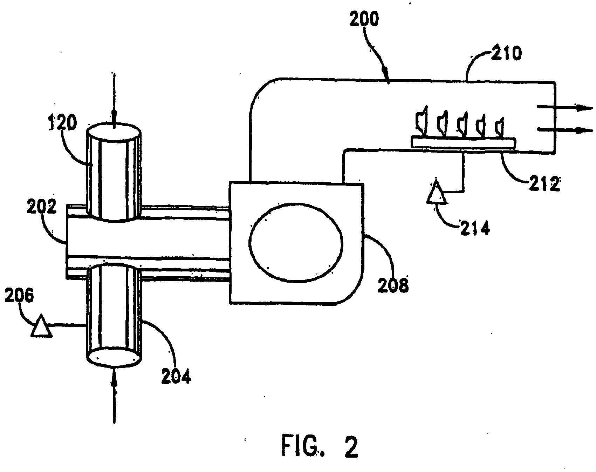

La figure 2 divulgue un système de recirculation (200) recouvert d'isolant. Une extrémité aval du conduit d'échappement (120) sert de conduit d'entrée relié à une chambre (202) de fourniture d'air qui fournit le gaz de recirculation dans la chambre (202) de fourniture d'air. Un conduit (204) d'entrée d'air est relié à la chambre (202) de fourniture d'air pour délivrer de l'air ambiant à la chambre (202) de fourniture d'air. Le conduit (204) d'entrée d'air est doté d'une commande ajustable (206), par exemple un obturateur ajustable commandé par moteur, qui ajuste le débit d'air d'entrée délivré dans la chambre d'alimentation (202). Par exemple, le débit d'air ambiant vers l'écoulement de gaz de recirculation sera ajusté par des ajustements appropriés des commandes ajustables (202) et (122). Une extrémité avale de la chambre de fourniture (202) délivre l'écoulement d'air ambiant et l'écoulement de gaz de recirculation à un ventilateur axial (208) qui refoule l'air ambiant et le gaz de recirculation à travers un dispositif de chauffage (210).

Dans le dispositif de chauffage (210), un brûleur (212), par exemple à gaz naturel, chauffe l'air ambiant et réchauffe le gaz de recirculation. Le gaz de recirculation réchauffé se combine avec l'air ambiant chauffé à la flamme pour devenir le gaz chaud qui est délivré dans la chambre (102) de la zone de chauffage. Dans le dispositif de chauffage (210), le gaz chaud est chauffé au moins jusqu'à la température de durcissement du liant et de préférence légèrement plus haut que la température de durcissement du liant. La température est ajustée par une commande ajustable (214) qui régule la flamme du brûleur (212). L'extrémité aval du dispositif de chauffage (210) divulgué dans la figure 2 est reliée à la fois au conduit d'entrée inférieur et au conduit d'entrée supérieur divulgués dans la figure 1, pour y délivrer le gaz chaud.

La figure 1 divulgue en outre un conduit (124) d'alimentation en air de refroidissement dans la chambre (104) de la zone de refroidissement. Un ou plusieurs conduits (124) d'alimentation en air de refroidissement sont prévus dans la chambre (104) de la zone de refroidissement en aval des conduits d'échappement (120). Chaque conduit (124) d'amenée d'air de refroidissement envoie de l'air de refroidissement dans l'isolant fibreux (108) pour refroidir rapidement l'isolant fibreux (108). Une commande ajustable (126), par exemple un obturateur ajustable commandé par moteur, ajuste le débit d'alimentation d'air de refroidissement. Un déflecteur isolé (128) prévu entre les conduits d'échappement (120) et les conduits (124) de fourniture d'air de refroidissement vise à isoler l'air de refroidissement vis-à-vis des conduits d'échappement (120) du gaz chaud. En outre, un conduit secondaire d'échappement (130) prévu dans la chambre (104) de la zone de refroidissement laisse échapper l'air de refroidissement après qu'il a refroidi l'isolant fibreux (108). En outre, le conduit secondaire d'échappement (130) laisse s'échapper l'air de refroidissement de manière à maintenir une pression négative dans la chambre (104) de la zone de refroidissement, ce qui isole encore l'air de refroidissement vis-à-vis des conduits d'échappement (120) prévus pour le gaz chaud. Le conduit secondaire d'échappement (130) est doté d'une commande ajustable (132), par exemple un obturateur ajustable commandé par moteur, qui ajuste le débit dans le conduit d'échappement secondaire (130). Pour la prévention des incendies, des têtes de projection (134) d'un système de projection d'eau sont prévues dans le four de durcissement (100).

Toujours en référence à la figure 1, un isolant fibreux (108) posé sur le transporteur est transporté dans la chambre (102) de la zone de chauffage en poursuivant le déplacement du transporteur (106). De l'air chaud est délivré dans le conduit inférieur d'entrée (112). Le gaz chaud est envoyé vers le haut dans l'isolant fibreux (108). La partie la plus basse de l'isolant a la densité la plus élevée, parce que le poids est proportionnel à l'épaisseur de l'isolant fibreux (108). Le liant présent sur l'isolant fibreux (108) qui a la densité la plus élevée tend à avoir la vitesse de durcissement la plus basse. Ainsi, le gaz chaud envoyé vers le haut tend à durcir la base de l'isolant fibreux (108) qui présente la densité la plus élevée.

En outre, de l'air chaud est délivré au conduit supérieur d'entrée (112a). Le gaz chaud est envoyé vers le bas dans l'isolant fibreux (108). Initialement, le liant présent dans l'isolant fibreux (108) est chauffé par un rapport entre les écoulements de gaz chaud de 1 : 1 entre l'écoulement dirigé vers le bas et l'écoulement dirigé vers le haut. L'isolant fibreux (108) qui sort de la chambre (102) de la zone de chauffage est inspecté pour vérifier si le durcissement est complet dans tout l'isolant fibreux (108).

Dans un mode de réalisation de l'isolant fibreux (108) qui a une épaisseur et/ou une densité relativement grande, le liant durcit à une basse vitesse de durcissement. Si l'inspection révèle que le durcissement du liant à l'intérieur de l'isolant fibreux (108) n'est pas terminé, on ajuste le rapport de manière à augmenter soit le débit vers le haut soit le débit vers le bas pour faire pénétrer le gaz chaud plus loin à l'intérieur de l'isolant fibreux (108) et ainsi durcir complètement le liant présent dans la partie interne de l'isolant fibreux (108).

Lorsqu'une ou plusieurs surfaces de l'isolant fibreux (108) sont recouvertes par des couches de surface (300) respectives et/ou par une couche de renfort (304), le rapport entre les écoulements de gaz est ajusté de manière à compenser et à surmonter une augmentation de la résistance à l'écoulement du gaz due à la couche (300) et/ou à la couche (304). On ajustera le rapport entre les écoulements de gaz par exemple en augmentant l'écoulement vers le haut dans l'isolant fibreux (108) lorsque la surface supérieure de l'isolant fibreux (108) est recouverte d'une couche de surface (300). En outre, on ajustera le rapport entre les écoulements de gaz par exemple en augmentant l'écoulement vers le bas dans l'isolant fibreux (108) lorsque la surface de base de l'isolant fibreux (108) est recouverte d'une couche de renfort (306). En outre, on ajustera le rapport d'écoulement de gaz par exemple en dirigeant l'écoulement de gaz sous la forme d'une combinaison d'un écoulement vers le haut et d'un écoulement vers le bas lorsque la surface supérieure de l'isolant fibreux (108) est recouverte d'une première couche de surface (300) et que la surface de base de l'isolant fibreux (108) est recouverte d'une deuxième couche de surface (306).

L'air de refroidissement s'écoule dans la chambre (104) de la zone de refroidissement de manière à refroidir l'isolant fibreux (108). Dans un mode de réalisation de l'isolant fibreux (108) qui présente des points chauds révélés par l'inspection de l'isolant fibreux (108), on peut refroidir le liant jusqu'à son état thermodurci en refroidissant l'isolant fibreux (108) par l'air de refroidissement. Cependant, lorsque les points chauds doivent être refroidis alors qu'une partie résiduelle du liant reste non durcie, un ou plusieurs étages du four de durcissement (100), suivant ce qui est requis, durciront le reste du liant.

Le four de durcissement (100) est doté de plusieurs étages, chaque étage présentant une chambre (102) de zone de chauffage et une chambre (104) de zone de refroidissement. Dans un premier étage, des points chauds sont produits par le gaz chaud qui s'écoule dans des parcours de court-circuit d'écoulement d'air entre certaines fibres isolantes de l'isolant fibreux. Le liant présent sur ces fibres isolantes durcit à une vitesse de durcissement plus élevée à cause des points chauds et est chauffé jusqu'à la température de durcissement dans une chambre (102) de la zone de chauffage du premier étage en étant ensuite refroidi dans une chambre (104) de la zone de refroidissement du premier étage. Le liant subit un changement de phase et passe à l'état thermodurci. Le reste du liant présent sur d'autres parties de l'isolant fibreux (108) peut ne pas avoir encore durci. Dans chaque étage successif, une partie supplémentaire du liant est chauffée et refroidie, c'est-à-dire durcie jusqu'à l'état thermodurci, de telle sorte qu'en un ou plusieurs étages, suivant ce qui est nécessaire, le reste du liant durcit et passe à l'état thermodurci. Le liant qui a atteint précédemment l'état thermodurci reste inchangé dans les étages suivants du four de durcissement (100), ce qui permet de transférer au liant non durci essentiellement toute la chaleur de l'air chauffé.

Dans un mode de réalisation d'isolant fibreux (108) qui présente une épaisseur relativement importante et/ou une densité élevée et/ou qui est recouvert sur une ou plusieurs surfaces principales par des couches de surface (300) respectives et/ou par une couche de renfort (304), le liant durcit à une vitesse de durcissement plus basse. Lorsqu'une inspection révèle qu'une partie résiduelle du liant présent dans la partie interne de l'isolant fibreux (108) n'a pas durci, plusieurs étages du four de durcissement (100) exécutent selon les besoins le durcissement de la partie résiduelle du liant.

Dans un premier étage, le liant présent sur les parties externes de l'isolant fibreux (108) est chauffé et refroidi jusqu'à l'état thermodurci. La partie restante du liant présente sur d'autres parties de l'isolant fibreux (108) peut n'avoir pas durci. Dans chaque étage successif, une partie supplémentaire du liant est chauffée et refroidie, c'est-à-dire durcie jusqu'à l'état thermodurci, de telle sorte qu'en un ou plusieurs étages successifs, suivant les besoins, la partie résiduelle du liant durcit jusqu'à l'état thermodurci. Le liant qui a atteint précédemment l'état thermodurci reste inchangé dans les étages suivants du four de durcissement (100), ce qui permet de transférer au liant qui n'a pas durci essentiellement toute la chaleur de l'air chaud.

Des modes de réalisation de l'isolant fibreux (108) ont une masse spécifique qui va de 0,3 pcf (livres par pied cubique, 1 livre par pied cubique = 16,02 kg/m³) à 6 pcf et de façon plus préférable de 1,0 pcf à 3 pcf. Son épaisseur est de 1/8 pouce à 8 pouces (1 pouce = 2,54 cm) et de façon plus préférable de 1,0 pouce à 6 pouces. Une couche de surface continue (300) est fixée à la surface principale inférieure de l'isolant fibreux (108) et la recouvre, à sa surface principale supérieure ou à la fois à la surface principale inférieure et à la surface principale supérieure. La vitesse de transport de l'isolant fibreux (108) dans la chambre (102) de la zone de chauffage varie de 10 pieds par minute à 100 pieds par minute (1 pied par minute = 0,00508 m/s). La répartition d'air est divisée entre l'air envoyé vers le haut et l'air envoyé vers le bas dans un rapport de 20 %, de 30 %, de 40 % ou de 50 %, et donc par incréments de 10 %.

La divulgation de tous les brevets, de toutes les demandes de brevet et de toutes les publications mentionnées ici est incorporée ici à titre de référence dans leur entièreté.

Bien que la présente invention ait été divulguée en référence à certains de ses modes de réalisation spécifiques, il est évident que d'autres modes de réalisation et d'autres variantes de la présente invention pourront être conçues par des personnes expérimentées dans la technique sans pour autant sortir de l'esprit fondamental ni de la portée de l'invention. Les revendications annexées comprennent tous ces modes de réalisation et toutes leurs variantes équivalentes.

Par exemple, en se référant à la figure 1, l'isolant fibreux 108 peut être confiné dans le four 100 entre deux bandes poreuses et/ou perméables à l'écoulement de gaz chaud, l'une constituant le transporteur 106, l'autre étant placée au contact de la face opposée de l'isolant fibreux, c'est-à-dire au contact de sa surface supérieure.

En particulier, les conduits de sortie (118 et 118a) peuvent ne pas accolés les uns aux autres tels que cela est représenté sur la figure 1. Selon un mode possible, des espaces peuvent être laissés entre deux canaux successifs 118 (ou 118a), ces espaces pouvant soit être obturés, soit ne pas être obturés. Par exemple, les espaces dans la partie haute, c'est-à-dire les espaces adjacents aux conduits 118a sont obturés, tandis que les espaces entre les conduits 118 sont laissés ouverts. Bien entendu, il est possible aussi d'obturer les espaces entre les conduits 118 et de laisser ouverts les espaces entre les conduits 118a. Avantageusement, dans ces modes de réalisation, l'extrémité des conduits 118 et 118a affleure ou de préférence est en contact respectivement avec le transporteur poreux 106 et avec la bande supérieure poreuse ou la partie externe du tapis fibreux.

Les espaces qui ne sont pas obturés peuvent en outre avantageusement permettre l'échappement ou même la régulation du cycle de l'air ayant permis le durcissement du liant de manière préférée d'une surface à l'autre, via des moyens appropriés. Cet air peut éventuellement être recyclé via le système de circulation ou selon les principes déjà décrits en relation avec la figure 2. Dans ce mode particulier de réalisation de l'invention, les espaces ouverts complètent ou même remplacent le conduit d'échappement 120 dans le four 100.

De manière différente de la représentation de la figure 1, les conduits de sortie dirigés vers le haut (118) et les conduits de sortie dirigés vers le bas (118a) ne sont pas forcément disposés en regard les uns des autres, c'est-à-dire qu'ils peuvent être décalés les uns par rapport au autres, en même temps qu'ils sont espacés.

A titre d'exemple, une réalisation de l'invention ayant donné de bons résultats en terme de durcissement du liant comprend :
- des conduits 118 et 118a de largeur 1 cm,
- un espacement régulier entre deux conduits successifs 118 ou entre deux conduits successifs 118a pouvant aller jusqu'à 20 cm, selon la direction de déplacement du transporteur 106,
- un décalage entre un conduit supérieur 118a et le conduit inférieur 118 qui lui succède immédiatement dans la direction de déplacement du transporteur 106 pouvant aller jusqu'à 10 cm,
- les espaces entres les conduits 118a étant obturés et les espaces entre les conduits 118 permettant l'évacuation de l'air chaud.

De manière plus générale, les expériences menées par la demanderesse ont montré de bons résultats pour :
- un espacement entre deux conduits successifs 118 ou entre deux conduits successifs 118a compris entre 2 et 50 cm, de préférence entre 5 et 30 cm,
- un décalage entre un conduit supérieur 118a et le conduit inférieur 118 qui lui succède immédiatement dans la direction de déplacement du transporteur 106 compris entre 1 et 30 cm, de préférence entre 5 et 20cm,
- une largeur des conduits comprise entre 0,5 et 5 cm.

## Revendications

1. Procédé de durcissement d'un liant présent sur les fibres isolantes d'un isolant fibreux, qui comprend au moins les étapes qui consistent à :
- ajuster la température d'un écoulement de gaz chaud au moins jusqu'à la température de durcissement du liant et
- amener le gaz chaud à s'écouler selon un rapport ajusté entre un écoulement dirigé vers le bas dans l'isolant fibreux et un écoulement dirigé vers le haut dans l'isolant fibreux de façon à durcir le liant et à compenser la basse vitesse de durcissement du liant sur les fibres isolantes présentes dans la partie interne de l'isolant fibreux, le rapport étant ajusté de manière à compenser l'épaisseur et la densité de l'isolant fibreux,
ledit procédé comprenant en outre les étapes qui consistent à chauffer l'isolant fibreux et ensuite à refroidir l'isolant fibreux par de l'air de refroidissement de manière à durcir au moins une partie du liant jusqu'à son état thermodurci, avec ensuite un étage suivant de chauffage de l'isolant fibreux suivi par un refroidissement de l'isolant fibreux par de l'air de refroidissement de manière à durcir la partie résiduelle du liant jusqu'à son état thermodurci.

2. Procédé selon l'une des revendications précédentes, qui comprend en outre les étapes qui consistent à :
- faire recirculer et chauffer au moins une partie de l'écoulement de gaz chaud de manière à former un écoulement de gaz de recirculation,
- combiner l'air ambiant avec l'écoulement de gaz de recirculation pour former l'écoulement de gaz chaud.

3. Procédé selon la revendication 2 qui comprend en outre l'étape qui consiste à ajuster le rapport entre l'écoulement de gaz chaud et l'air ambiant.

4. Procédé selon l'une des revendications précédentes, qui comprend en outre l'étape qui consiste à laisser s'échapper l'écoulement de gaz latéralement par rapport à l'écoulement vers le haut et par rapport à l'écoulement vers le bas.

5. Procédé selon l'une des revendications précédentes, dans lequel la surface supérieure de l'isolant fibreux est recouverte par une couche de surface et qui comprend en outre l'étape qui consiste à augmenter l'écoulement vers le haut dans l'isolant fibreux de manière à compenser le fait que la surface supérieure de l'isolant fibreux est recouverte par une couche de surface.

6. Procédé selon l'une des revendications précédentes, dans lequel la surface inférieure de l'isolant fibreux est recouverte par une couche de renfort et qui comprend en outre l'étape qui consiste à augmenter l'écoulement vers le bas dans l'isolant fibreux de manière à compenser le fait que la surface inférieure de l'isolant fibreux est recouverte par une couche de renfort.

7. Procédé selon l'une des revendications 5 ou 6, qui comprend en outre l'étape qui consistent à ajuster le rapport entre l'écoulement vers le haut et l'écoulement vers le bas de manière à compenser le fait que la surface supérieure de l'isolant fibreux est recouverte par une première couche de surface et que la surface de base de l'isolant fibreux est recouverte par une deuxième couche de surface.

8. Procédé selon l'une des revendications précédentes, qui comprend en outre l'étape qui consiste à ajuster le rapport entre l'écoulement vers le haut et l'écoulement vers le bas de manière à surmonter la résistance à l'écoulement de gaz due à une ou plusieurs couches de surface sur les surfaces correspondantes de l'isolant fibreux.

## Patentansprüche

1. Verfahren zum Härten eines auf isolierenden Fasern eines faserigen Isoliermittels vorliegendem Bindemittels, das wenigstens die folgenden Schritte umfasst:
- Einstellen der Temperatur einer heißen Gasströmung wenigstens bis zu der Härtetemperatur des Bindemittels und
- Leiten des heißen Gases, so dass es gemäß einem eingestellten Verhältnis zwischen einer nach unten in das faserigen Isoliermittel gerichteten Strömung und einer nach oben in das faserige Isoliermittel gerichteten Strömung fließt, so dass das Bindemittel gehärtet wird und so dass die geringere Geschwindigkeit des Härtens des Bindemittels auf den isolierenden Fasern, die im inneren Teil des faserigen Isoliermittels vorliegen, ausgeglichen wird, wobei das Verhältnis so eingestellt wird, dass die Dicke und die Dichte des faserigen Isoliermittels ausgeglichen werden,
wobei das Verfahren außerdem die Schritte umfasst, worin das faserige Isoliermittel erwärmt wird und anschließend das faserige Isoliermittel mit Kühlluft abgekühlt wird, so dass wenigstens ein Teil des Bindemittels bis zu seinem duroplastischen Zustand gehärtet wird, mit einer danach folgenden Stufe des Erwärmens des faserigen Isoliermittels, gefolgt von Abkühlen des faserigen Isoliermittels mit Kühlluft, so dass der verbleibende Teil des Bindemittels bis zu seinem duroplastischen Zustand gehärtet wird.

2. Verfahren nach einem der vorhergehenden Ansprüche, das ferner die folgenden Schritte umfasst:
- Umwälzen und Erwärmen wenigstens eines Teils der heißen Gasströmung, so dass eine umgewälzte Gasströmung gebildet wird,
- Mischen von Umgebungsluft mit der umgewälzten Gasströmung zum Bilden einer heißen Gasströmung.

3. Verfahren nach Anspruch 2, das ferner einen Schritt umfasst, worin das Verhältnis zwischen der heißen Gasströmung und der Umgebungsluft eingestellt wird.

4. Verfahren nach einem der vorhergehenden Ansprüche, welches ferner den Schritt umfasst, worin man die heiße Gasströmung seitlich im Verhältnis zu der Strömung nach oben und im Verhältnis zu der Strömung nach unten austreten lässt.

5. Verfahren nach einem der vorhergehenden Ansprüche, in dem die obere Oberfläche des faserigen Isoliermittels mit einer Oberflächenschicht bedeckt ist, und das ferner einen Schritt umfasst, worin die Strömung nach oben in das faserige Isoliermittel erhöht wird, so dass die Tatsache, dass die obere Oberfläche des faserigen Isoliermittels von einer Oberflächenschicht bedeckt ist, ausgeglichen wird.

6. Verfahren nach einem der vorhergehenden Ansprüche, in dem die untere Oberfläche des faserigen Isoliermittels mit einer Verstärkungsschicht bedeckt ist, und das ferner einen Schritt umfasst, worin die Strömung nach unten in das faserige Isoliermittel erhöht wird, so dass die Tatsache, dass die untere Oberfläche des faserigen Isoliermittels von einer Verstärkungsschicht bedeckt ist, ausgeglichen wird.

7. Verfahren nach einem der Ansprüche 5 oder 6, das ferner einen Schritt umfasst, worin das Verhältnis der Strömung nach oben und der Strömung nach unten so eingestellt wird, dass die Tatsache, dass die obere Oberfläche des faserigen Isoliermittels von einer ersten Oberflächenschicht bedeckt ist, und dass die Basisfläche des faserigen Isoliermittels von einer zweiten Oberflächenschicht bedeckt ist, ausgeglichen wird.

8. Verfahren nach einem der vorhergehenden Ansprüche, das ferner einen Schritt umfasst, worin das Verhältnis der Strömung nach oben und der Strömung nach unten so eingestellt wird, dass der Widerstand gegen die Gasströmung aufgrund einer oder mehrerer Oberflächenschichten auf den entsprechenden Oberflächen des faserigen Isoliermittels überwunden wird.

## Claims

1. Method for curing a binder present on the insulation fibres of a fibrous insulation, which comprises at least the steps that consist in:
- adjusting the temperature of a heated gas flow to at least the curing temperature of the binder; and
- directing the heated gas to flow in a ratio adjusted between a flow directed downwards into the fibrous insulation and a flow directed upwards into the fibrous insulation so as to cure the binder and to compensate for the slow curing rate of the binder on the insulation fibres present in the internal portion of the fibrous insulation, the ratio being adjusted so as to compensate for the thickness and the density of the fibrous insulation,
said method further comprising the steps that consist in heating the fibrous insulation and then cooling the fibrous insulation with cooling air so as to cure at least one portion of the binder to its thermoset state, followed by a subsequent stage of heating the fibrous insulation followed by cooling the fibrous insulation with cooling air so as to cure the remaining portion of the binder to its thermoset state.

2. Method according to one of the preceding claims, which further comprises the steps that consist in:
- recirculating and heating at least one portion of the heated gas flow so as to form a recirculating gas flow;
- combining ambient air with the recirculating gas flow so as to form the heated gas flow.

3. Method according to Claim 2, further comprising the step that consists in adjusting the ratio between the heated gas flow and the ambient air.

4. Method according to one of the preceding claims, further comprising the step that consists in exhausting the gas flow laterally relative to the upward flow and relative to the downward flow.

5. Method according to one of the preceding claims, in which the upper surface of the fibrous insulation is covered with a facing layer and which further comprises the step that consists in increasing the flow upwards into the fibrous insulation so as to compensate for the fact that the upper surface of the fibrous insulation is covered with a facing layer.

6. Method according to one of the preceding claims, in which the lower surface of the fibrous insulation is covered with a reinforcing layer and which also comprises the step that consists in increasing the flow downwards into the fibrous insulation so as to compensate for the fact that the lower surface of the fibrous insulation is covered with a reinforcing layer.

7. Method according to either of Claims 5 or 6, which also comprises the step that consists in adjusting the ratio between the upward flow and the downward flow so as to compensate for the fact that the upper surface of the fibrous insulation is covered with a first facing layer and that the bottom surface of the fibrous insulation is covered with a second facing layer.

8. Method according to one of the preceding claims, which also comprises the step that consists in adjusting the ratio between the upward flow and the downward flow so as to overcome the resistance to the gas flow due to one or more facing layers on the corresponding surfaces of the fibrous insulation.
